# EUROPÄISCHE PATENTSCHRIFT

(11) **EP 2 819 796 B1**
(45) Veröffentlichungstag und Bekanntmachung des Hinweises auf die Patenterteilung: **19.05.2021**
(21) Anmeldenummer: 13700205.1
(22) Anmeldetag: 04.01.2013
(51) Int. Cl.: B21K 23/00, B23D 65/02, B27B 33/14

(54) **VERFAHREN ZUR HERSTELLUNG VON ZUMINDEST EINEM SCHNEIDSTRANGSEGMENT EINES SCHNEIDSTRANGS EINER WERKZEUGMASCHINENTRENNVORRICHTUNG**
PROCESS FOR THE MANUFACTURE OF A CUTTING LINK OF A CHAIN SAW FOR A SAWING SPLITTING APPARATUS
PROCÉDÉ DE FABRICATION D'UN MAILLON COUPANT D'UNE CHAÎNE COUPANTE POUR MACHINE DE SCIAGE TRONÇONNAGE

(30) Priorität: 02.03.2012 DE 102012004049
(43) Veröffentlichungstag der Anmeldung: 07.01.2015
(73) Patentinhaber: Robert Bosch GmbH, 70442 Stuttgart (DE)
(72) Erfinder: ENGELFRIED, Uwe, 73760 Ostfildern (DE); BOZIC, Milan, 4500 Solothurn (CH); GRULICH, Petr, 73230 Kirchheim/Teck (DE)
(86) Internationale Anmeldenummer: PCT/EP2013/050107
(87) Internationale Veröffentlichungsnummer: WO 2013/127543

(56) Entgegenhaltungen:
- DE-C- 814 787
- DE-C- 814 938
- US-A- 3 538 965
- US-A- 3 910 147
- US-A- 4 554 853

## Beschreibung

### Stand der Technik

Es sind bereits Verfahren zur Herstellung von einem Schneidstrangsegment eines Schneidstrangs einer Werkzeugmaschinentrennvorrichtung bekannt, wobei das Schneidstrangsegment ein Schneidenträgerelement und ein Schneidelement umfasst (siehe z.B. US 4 554 853).

### Offenbarung der Erfindung

Die Erfindung geht aus von einem Verfahren zur Herstellung von zumindest einem Schneidstrangsegment eines Schneidstrangs einer Werkzeugmaschinentrennvorrichtung gemäß Anspruch 1, das zumindest ein Schneidenträgerelement und zumindest ein Schneidelement umfasst.

Unter einem "Schneidstrangsegment" soll hier insbesondere ein Segment eines Schneidstrangs verstanden werden, das dazu vorgesehen ist, zur Bildung des Schneidstrangs mit weiteren Segmenten des Schneidstrangs verbunden zu werden. Bevorzugt ist das Schneidstrangsegment als Kettenglied ausgebildet, das zur Bildung des vorzugsweise als Schneidkette ausgebildeten Schneidstrangs mit weiteren als Kettenglieder ausgebildeten Schneidstrangsegmenten verbunden ist. Unter einem "Schneidstrang" soll hier insbesondere eine Einheit aus Schneidstrangsegmenten verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Der Schneidstrang ist besonders bevorzugt als Schneidkette ausgebildet. Hierbei können die Schneidstrangsegmente lösbar, wie beispielsweise mittels eines Kettenschlosses usw., und/oder unlösbar miteinander verbunden sein. Es ist jedoch auch denkbar, dass der Schneidstrang als Schneidband und/oder Schneidseil ausgebildet ist. Bei einer Ausbildung des Schneidstrangs als Schneidband und/oder als Schneidseil werden die Schneidstrangsegmente direkt an dem Schneidband und/oder an dem Schneidseil fixiert. Die Schneidstrangsegmente können hierbei beabstandet voneinander und/oder in direktem Kontakt miteinander an dem Schneidband und/oder an dem Schneidseil angeordnet sein.

Unter einem "Schneidenträgerelement" soll hier insbesondere ein Element verstanden werden, an dem zumindest ein Schneidelement zum Abtrennen und/oder zum Abtragen von Werkstoffteilchen eines zu bearbeitenden Werkstücks fixiert ist. Erfindungsgemäß ist das Schneidelement einstückig mit dem Schneidenträgerelement ausgebildet. Unter "einstückig" soll insbesondere in einem Stück geformt verstanden werden, wie beispielsweise durch eine Herstellung aus einem Guss und/oder durch eine Herstellung in einem Ein- oder Mehrkomponentenspritzverfahren und erfindungsgemäß aus einem einzelnen Stanzrohling. Hierbei kann das Schneidelement als Halbmeißelzahn, als Vollmeißelzahn, als "scratcher"-Zahn (Risserzahn) usw. ausgebildet sein. Es ist jedoch auch denkbar, dass das Schneidelement eine andere, einem Fachmann als sinnvoll erscheinende Zahnform aufweist. Mittels des erfindungsgemäßen Verfahrens kann vorteilhaft insbesondere in einem Übergangsbereich zwischen dem Schneidelement und dem Schneidenträgerelement eine mechanisch stabile Verbindung erreicht werden. Zudem dadurch, dass das Schneidelement und das Schneidenträgerelemenaus einem Rohling geformt werden, können besonders vorteilhaft Montageaufwand und Kosten eingespart werden. Erfindungsgemäß wird das Schneidele-ment durch Prägen zumindest partiell verschränkt relativ zur Außenfläche des Schneidenträgerelements am Schneidenträgerelement angeformt. Bevorzugt verläuft die Außenfläche des Schneidenträgerelements zumindest im Wesentlichen parallel zu einer Schneidebene des Schneidstrangs. Der Begriff "Schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zu einer Führungseinheit der Werkzeugmaschinentrennvorrichtung bewegt wird. Bevorzugt ist die Schneidebene bei einer Bearbeitung eines Werkstücks zumindest im Wesentlichen quer zu einer zu bearbeitenden Werkstückoberfläche ausgerichtet.

Unter einer "Schneidrichtung" soll hier insbesondere eine Richtung verstanden werden, entlang deren der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer zu bearbeitenden Werkstückoberfläche ausgerichtet ist, insbesondere bei einer Ausbildung des Schneidstrangs als Schleifmittel usw. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Mittels des Prägens kann vorteilhaft kostengünstig das Schneidelement an das Schneidenträgerelement angeformt werden. Zudem können Störkonturen während der Herstellung an den Schneidelementen vorteilhaft vermieden werden bzw. gering gehalten werden.

Ferner wird vorgeschlagen, dass in zumindest einem Schritt durch Prägen ein Quersicherungselement an das Schneidenträgerelement angeformt wird. Vorzugsweise wird das Quersicherungselement an ein einstückig mit dem Schneidenträgerelement ausgebildetes Verbindungselement des Schneidstrangs angeformt. Unter einem "Quersicherungselement" soll hier insbesondere ein Element verstanden werden, das infolge eines Formschlusses und/oder infolge eines Kraftschlusses eine Bewegung entlang einer Querachse, die zumindest im Wesentlichen senkrecht zur Schneidebene des Schneidstrangs verläuft, zu sichern. Bevorzugt ist das Quersicherungselement differierend zu einem Nietkopf oder einem Schraubenkopf ausgebildet. Vorzugsweise ist das Quersicherungselement dazu vorgesehen, eine Querbewegung mittels eines Formschlusses zu sichern bzw. zu begrenzen. Es ist jedoch auch denkbar, dass das Quersicherungselement dazu vorgesehen ist, eine Querbewegung mittels einer anderen, einem Fachmann als sinnvoll erscheinenden Art und Weise zumindest zu sichern bzw. zu begrenzen, wie beispielsweise mittels einer magnetischen Kraft usw. Der Ausdruck "in einem montierten Zustand des Schneidenträgerelements weitestgehend gegen eine Querbewegung relativ zu einem weiteren Schneidenträgerelement des Schneidstrangs zu sichern" soll hier insbesondere eine Begrenzung einer Bewegung der miteinander mittels zumindest eines Verbindungselements verbundenen Schneidenträgerelemente relativ zueinander mittels des Quersicherungselements entlang einer zumindest im Wesentlichen senkrecht zu einer Schneidebene des Schneidstrangs verlaufenden Bewegungsstrecke definieren. Die Bewegungsstrecke der Schneidenträgerelemente relativ zueinander wird hierbei insbesondere mittels des Quersicherungselements auf einen Wert kleiner als 5 mm, bevorzugt kleiner als 2 mm und besonders bevorzugt kleiner als 1 mm begrenzt. Mittels des erfindungsgemäßen Verfahrens kann vorteilhaft eine kostengünstig herzustellende Sicherungsfunktion an dem Schneidenträgerelement realisiert werden.

Vorteilhaft kann das Schneidstrangsegment des Schneidstrangs der Werkzeugmaschinentrennvorrichtung, mittels des erfindungsgemäßen Verfahrens erhältlich sein. Das Schneidstrangsegment ist insbesondere als Kettenglied eines als Schneidkette ausgebildeten Schneidstrangs ausgebildet. Hierbei kann der Schneidstrang als eingliedrige Schneidkette ausgebildet sein, bei der einzelne Schneidstrangsegmente direkt miteinander verbunden sind. Der Schneidstrang kann jedoch auch als mehrgliedrige Schneidkette ausgebildet sein, bei der zumindest zwei Schneidstrangsegmente zusammen ein Kettenglied bilden und mittels eines Treibglieds mit weiteren ein Kettenglied bildenden Schneidstrangsegmenten verbunden ist. Ein Fachmann wird je nach Anwendungsgebiet eine für ein Einstatzspektrum sinnvoll erscheinende Ausgestlatung des Schneidstrangs auswählen. Das Schneidstrangsegment umfasst das Schneidenträgerelement und das Schneidelement, die einstückig ausgebildet sind. Vorzugsweise ist das Schneidstrangsegment entkoppelt von einem Schnitttiefenbegrenzerelement ausgebildet. Es kann vorteilhaft ein kompaktes und robustes Schneidstrangsegment realisiert werden.

Besonders bevorzugt wird vorgeschlagen, dass das Schneidelement entlang der Schneidrichtung eine sich verändernde Verschränkung relativ zur Außenfläche des Schneidenträgerelements aufweist. Es ist jedoch auch denkbar, dass das Schneidelement entlang der Schneidrichtung eine einheitliche bzw. gleichbleibende Verschränkung relativ zur Außenfläche des Schneidenträgerelements aufweist. Unter einer "Verschränkung" soll hier insbesondere eine Neigung einer Mittelachse des Schneidelements und/oder einer zumindest im Wesentlichen parallel zu einer Schneidkante des Schneidelements verlaufende Seitenfläche des Schneidelements um zumindest eine Achse relativ zur einer Bezugsfläche, insbesondere der Außenfläche des Schneidenträgerelements, verstanden werden. Bevorzugt wird die Seitenfläche des Schneidelements um eine zumindest im Wesentlichen parallel zur Außenfläche verlaufende Achse relativ zur Außenfläche geneigt. Vorzugsweise weist das Schneidelement, insbesondere die Seitenfläche des Schneidelements, einen sich entlang der Schneidrichtung verändernden Verschränkungswinkel, insbesondere Neigungswinkel, relativ zur Außenfläche auf. Insbesondere ist ein maximaler Neigungswinkel relativ zur Außenfläche kleiner als 15°, bevorzugt kleiner als 8° und besonders bevorzugt kleiner als 5°. Besonders bevorzugt ist das Schneidelement um zwei zumindest im Wesentlichen senkrecht verlaufende Achsen relativ zur Außenfläche des Schneidenträgerelements geneigt am Schneidenträgerelement angeordnet. Die zwei zumindest im Wesentlichen senkrecht verlaufenden Achsen erstrecken sich hierbei bevorzugt zumindest im Wesentlichen parallel zur Außenfläche des Schneidenträgerelements und/oder zur Schneidebene des Schneidstrangs. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Mittels einer Ausgestaltung kann vorteilhaft eine mechanische Eigenschaft des Schneidelements positiv beeinflusst werden. Ferner kann vorteilhaft eine stabile Anbindung des Schneidelements an das Schneidenträgerelement erreicht werden.

Zudem wird vorgeschlagen, dass das Schneidstrangsegment zumindest ein weiteres Schneidelement umfasst, das zumindest partiell verschränkt relativ zur Außenfläche des Schneidenträgerelements am Schneidenträgerelement angeordnet ist. Hierbei ist das weitere Schneidelement insbesondere einstückig mit dem Schneidenträgerelement ausgebildet. Vorzugsweise weist das weitere Schneidenträgerelement eine zu dem Schneidenträgerelement verschiedene Verschränkung relativ zur Außenfläche des Schneidenträgerelements auf. Es kann vorteilhaft eine Anpassung der einzelnen Schneidelemente an verschiedene Bearbeitungsvorgänge erfolgen. Somit kann vorteilhaft ein präzises Arbeitsergebnis bei einer Bearbeitung eines Werkstücks mittels des Schneidstrangsegments erreicht werden.

Vorteilhafterweise sind das Schneidelement und das weitere Schneidelement entlang der Schneidrichtung wellenförmig an dem Schneidenträgerelement angeordnet. Bevorzugt weist der Schneidstrang durch die wellenförmige Anordnung des Schneidelements und des weiteren Schneidelements jedes einzelnen Schneidenträgerelements entlang der Schneidrichtung einen sinusförmigen Verlauf von Schneidelementen auf. Hierbei können das Schneidelement und das weitere Schneidelement insbesondere in entgegengesetzte Richtungen relativ zur Außenfläche verschränkt am Schneidenträgerelement angeordnet sein. Zudem können das Schneidelement und das weitere Schneidelement insbesondere in eine Richtung verschränkt sein, wobei das Schneidelement und das weitere Schneidelement unterschiedliche Verschränkungswinkel relativ zur Außenfläche des Schneidenträgerelements aufweisen. Mittels einer Ausgestaltung können vorteilhaft mehrere Funktionspartien an einem Schneidenträgerelement realisiert werden.

Des Weiteren geht eine Weiterbildung aus von einer Werkzeugmaschinentrennvorrichtung mit zumindest der Führungseinheit und mit zumindest einem Schneidstrang, der wenigstens ein mittels des erfindungsgemäßen Verfahrens hergestelltes Schneidstrangsegment aufweist. Die Führungseinheit ist bevorzugt zur Führung des Schneidstrangs vorgesehen. Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmitteln usw., voneinander trennbar sind. Mittels der Ausgestaltung der Werkzeugmaschinentrennvorrichtung kann vorteilhaft ein vielseitig einsetzbares Werkzeug zur Bearbeitung von Werkstücken erreicht werden.

Zudem geht eine Weiterbildung aus von einer tragbaren Werkzeugmaschine mit zumindest einer Kopplungsvorrichtung, die formschlüssig und/oder kraftschlüssig mit einer Werkzeugmaschinentrennvorrichtung koppelbar ist. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Es kann vorteilhaft eine tragbare Werkzeugmaschine erreicht werden, die besonders vorteilhaft für ein breites Einsatzspektrum geeignet ist.

Die Werkzeugmaschinentrennvorrichtung und/oder die tragbare Werkzeugmaschine soll hierbei nicht auf die oben beschriebene Anwendung und Ausführungsform beschränkt sein. Insbesondere kann die Werkzeugmaschinentrennvorrichtung und/oder die tragbare Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Diagramm eines Ablaufs eines erfindungsgemäßen Verfahrens zur Herstellung von zumindest einem Schneidstrangsegment eines Schneidstrangs in einer schematischen Darstellung,
- Fig. 2: eine tragbare Werkzeugmaschine mit einer Werkzeugmaschinentrennvorrichtung in einer schematischen Darstellung,
- Fig. 3: eine Detailansicht der Werkzeugmaschinentrennvorrichtung in einer schematischen Darstellung,
- Fig. 4: eine Detailansicht eines Schneidstrangsegments eines Schneidstrangs der Werkzeugmaschinentrennvorrichtung in einer schematischen Darstellung,
- Fig. 5: eine Detailansicht einer Anordnung von Schneidstrangsegmenten des Schneidstrangs aus Figur 4 innerhalb des Schneidstrangs in einer schematischen Darstellung,
- Fig. 6: eine Detailansicht eines alternativen Schneidstrangsegments eines alternativen Schneidstrangs in einer schematischen Darstellung und
- Fig. 7: eine Detailansicht eines weiteren, alternativen Schneidstrangsegments eines Schneidstrangs in einer schematischen Darstellung.

### Beschreibung der Ausführungsbeispiele

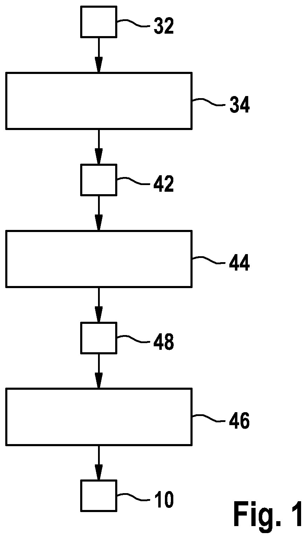

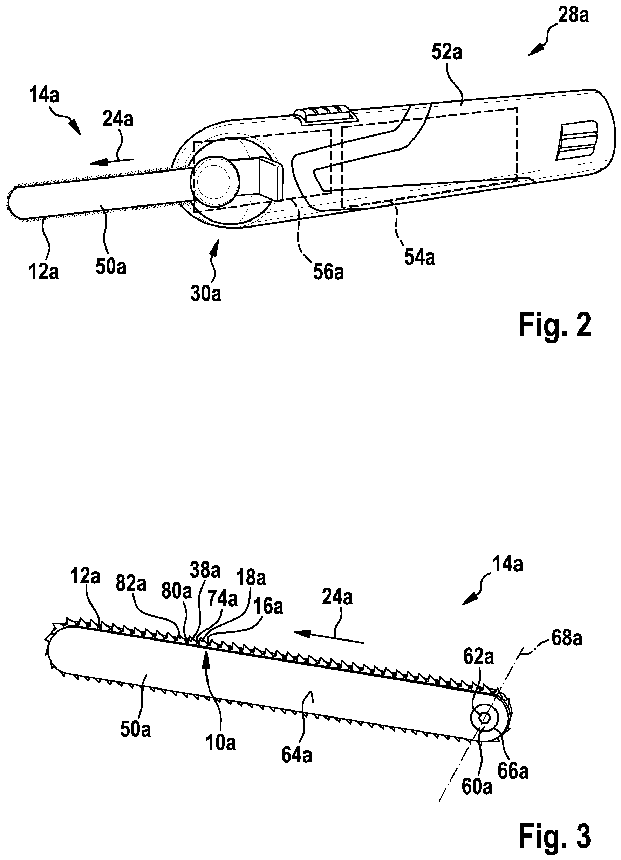

Figur 1 zeigt einen schematischen Ablauf eines Verfahrens zur Herstellung von zumindest einem Schneidstrangsegment 10 eines Schneidstrangs 12 (in Figuren 2 bis 7 mit Buchstaben a bis c versehen), das zumindest ein Schneidelement 18 und ein Schneidenträgerelement 16 (in Figuren 3 bis 7 mit Buchstaben a bis c versehen) umfasst. Das Schneidstrangsegment 10 wird erfindungsgemäß in einem ersten Schritt aus einem Bandmaterial 32 gestanzt. Denkbar, jedoch außerhalb des Rahmens der vorliegenden Erfindung wäre, dass das Schneidstrangsegment 10 aus dem Bandmaterial 32 heraus gelasert wird, mittels eines Wasserstrahls heraus geschnitten wird oder mittels eines Abtrags- und Umformungsverfahren heraus geschnitten wird, wie beispielsweise durch Erodieren, Fräsen usw. Hierbei wird als Bandmaterial 32 ein Bimetall verwendet. In einer alternativen Ausführung des Verfahrens wird als Bandmaterial 32 ein Hartmetall verwendet. Es ist jedoch auch denkbar, dass als Bandmaterial 32 ein anderer, einem Fachmann als sinnvoll erscheinender Werkstoff verwendet wird, der sich zu einem Stanzvorgang eignet. Das Bandmaterial 32 wird mittels einer Abrollvorrichtung (hier nicht näher dargestellt) auf eine, einem Fachmann bereits bekannte Art und Weise einer Stanzvorrichtung 34 zugeführt.

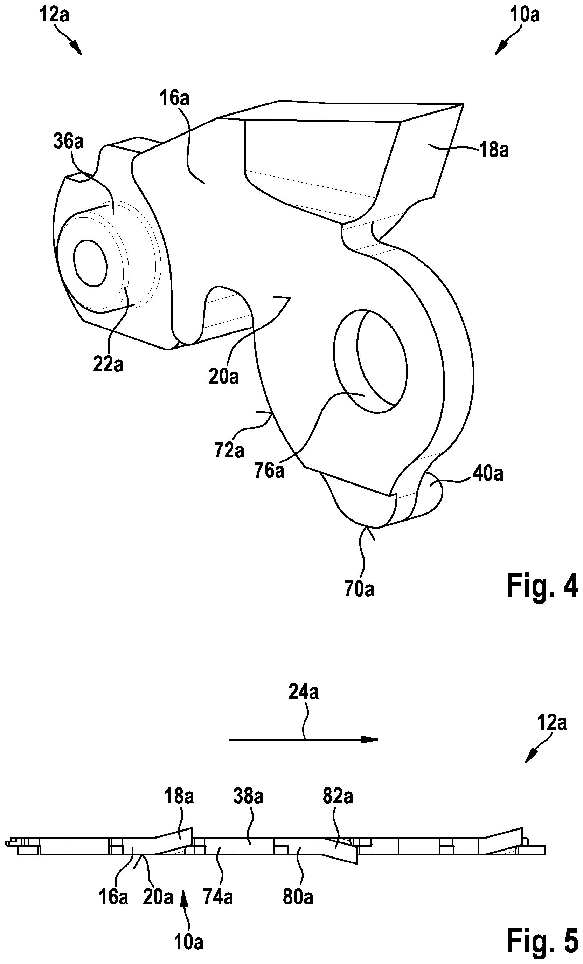

Mittels der Stanzvorrichtung 34 wird das Schneidstrangsegment 10 aus dem Bandmaterial 32 heraus gestanzt. Somit wird das Schneidelement 18 und das Schneidenträgerelement 16 während eines Verfahrensschritts aus dem Bandmaterial 32 heraus gestanzt. Es ist jedoch auch denkbar, dass mittels der Stanzvorrichtung 34 mehrere Schneidelemente an das Schneidenträgerelement 16 angeformt werden. Ferner wird mittels der Stanzvorrichtung 34 ein Verbindungselement 36 (in Figuren 4, 6 und 7 mit Buchstaben a bis c versehen) des Schneidstrangs 12 mittels eines Umformens durch ein Zusammenwirken einer Matrize und eines Stempels der Stanzvorrichtung 34 ebenfalls bereits während des Stanzens an das Schneidenträgerelement 16 angeformt. Zudem wird mittels des Zusammenwirkens der Matrize und des Stempels eine Verbindungsausnehmung 76 (in Figuren 4, 6 und 7 mit Buchstaben a bis c versehen) des Schneidstrangsegments 10 an das Schneidenträgerelement 16 angeformt bzw. in das Schneidenträgerelement 16 eingebracht. Es ist jedoch auch denkbar, dass das Verbindungselement 36 nach dem Stanzvorgang mittels einer Verbindungselementsprägevorrichtung (hier nicht näher dargestellt) in das Schneidenträgerelement 16 eingeprägt wird. Ferner wird mittels des Zusammenwirkens der Matrize und des Stempels ein Segmentführungselement 40 (in Figuren 4, 6 und 7 mit Buchstaben a bis c versehen) des Schneidstrangsegments 10 an das Schneidenträgerelement 16 angeformt. Es ist jedoch auch denkbar, dass zusätzlich mittels des Zusammenwirkens der Matrize und des Stempels weitere Funktionselemente an das Schneidstrangsegment 10 angeformt werden, wie beispielsweise ein Quersicherungsbereich, usw.

In einem weiteren Schritt wird das Schneidstrangsegment 10 einem Präge-vorgang unterzogen. Hierbei wird das Schneidstrangsegment 10 in Form eines gestanzten Rohlings 42 einer Prägevorrichtung 44 zugeführt. Mittels der Prägevorrichtung 44 wird das Schneidelement 18 durch Prägen zumindest partiell verschränkt relativ zu einer Außenfläche 20 (in Figuren 4, 6 und 7 mit Buchstaben a bis c versehen) des Schneidenträgerelements 16 am Schneidenträgerelement 16 angeformt. Hierbei wird Material im Bereich des Schneidelements 18 durch die Prägevorrichtung 44 relativ zur Außenfläche 20 versetzt. Das Schneidelement 18 wird hierbei durch Prägen zumindest partiell verschränkt relativ zur Außenfläche 20 des Schneidenträgerelements 16 am Schneidenträgerelement 16 angeformt. Es ist jedoch auch denkbar, dass das Schneidstrangsegment 10 erst zu einem späteren Zeitpunkt im Verfahren der Prägevorrichtung 44 zugeführt wird, um das Schneidelement 18 relativ zur Außenfläche 20 zu verschränken. Zudem wird in zumindest einem Schritt durch Prägen in der Prägevorrichtung 44 ein Quersicherungselement 22 (in Figuren 4, 6 und 7 mit Buchstaben a bis c versehen) an das Schneidenträgerelement 16 angeformt. Hierbei ist es denkbar, dass das Quersicherungselement 22 erst nach einer Fertigstellung des Schneidstrangsegments 10 und nach einer Montage von weiteren Schneidstrangsegmenten zur Bildung des Schneidstrangs 12 mittels einer weiteren Prägevorrichtung (hier nicht näher dargestellt) in das Schneidenträgerelement 16 des Schneidstrangsegments 10 geprägt wird.

Das Schneidstrangsegment 10 wird ferner in einem weiteren Schritt einer Veredelungsvorrichtung 46 zugeführt, um das Schneidstrangsegment 10 einem Veredelungsprozess zuzuführen. Hierbei wird das Schneidstrangsegment 10 als geprägter Rohling 48 der Veredelungsvorrichtung 46 zugeführt. In der Veredelungsvorrichtung 46 wird zumindest in einem Teilbereich des Schneidstrangsegments 10 eine Beschichtung auf das Schneidstrangsegment 10 aufgebracht. Der Teilbereich des Schneidstrangsegments 10 wird von dem Schneidelement 18 gebildet. Hierbei wird das Schneidstrangsegment 10 mit dem Schneidelement 18 durch eine Tauchbadeinheit (hier nicht näher dargestellt) der Veredelungsvorrichtung 46 geführt. In der Tauchbadeinheit wird das Schneidelement 18 zumindest teilweise mit einem Lot beschichtet. Es ist jedoch auch denkbar, dass das Schneidelement 18 mittels einer Auftrageeinheit der Veredelungsvorrichtung 46 mit einem Lot beschichtet wird. In einem weiteren Schritt erfolgt in der Veredelungsvorrichtung 46 eine Bestückung des mit Beschichtung versehenen Teilbereichs des Schneidstrangsegments 10 mit Partikeln. Hierbei werden die Partikel entweder mittels eines Durchfahrens eines weiteren Tauchbads oder mittels eines Aufdrückens auf den mit Beschichtung versehenen Teilbereich des Schneidstrangsegments 10 mit Partikeln bestückt. Die Partikel sind als Diamant-, als Hartmetall- oder als Keramikpartikel ausgebildet. Es ist jedoch auch denkbar, dass das Schneidstrangsegment 10 zumindest in einem Teilbereich alternativ zum Tauchbad mittels einer chemischen Gasphasenabscheidungseinheit (hier nicht näher dargestellt) der Veredelungsvorrichtung 46 beschichtet wird. Andere, einem Fachmann als sinnvoll erscheinende Verfahren zu einer Beschichtung des Schneidelements 18 des Schneidstrangsegments 10 mittels der Veredelungsvorrichtung 46 sind ebenfalls denkbar, wie beispielsweise mittels eines physikalischen Gasphasenabscheidungsverfahrens (PVD-Verfahren) oder mittels eines plasmaunterstützten chemischen Gasphasenabscheidungsvefahrens (PACVD-Verfahren) usw. Nach einem Veredelungsvorgang mittels der Veredelungsvorrichtung 46 ist das Schneidstrangsegment 10 als Fertigteil ausgebildet, das in einem weiteren Arbeitsprozess zur Bildung des Schneidstrangs 12 mit weiteren, hier nicht näher dargestellten Schneidstrangsegmenten verbunden wird. Hierbei werden die einzelnen Schneidstrangsegmente einer Montagevorrichtung zugeführt, in der die einzelnen Schneidstrangsegmente miteinander verbunden werden. Es ist denkbar, dass an die Schneidstrangsegmente mittels der weiteren Prägevorrichtung (hier nicht näher dargestellt) nach einer Montage Quersicherungselemente angeformt werden, die dazu vorgesehen sind, eine Querbewegung der einzelnen Schneidstrangsegmente entlang einer zumindest im Wesentlichen senkrecht zu einer Schneidebene des Schneidstrangs 12 verlaufenden Richtung weitestgehend zu verhindern.

In Figuren 2 bis 9 sind verschiedene Ausführungsbeispiele von Schneidstrangsegmenten dargestellt, die mittels des oben beschriebenen Verfahrens hergestellt werden. Hierbei sind den Ausführungsbeispielen zur Unterscheidung den Bezugszeichen der Ausführungsbeispiele die Buchstaben a bis d hinzugefügt. Die nachfolgende Beschreibung der Ausführungsbeispiele beschränkt sich im Wesentlichen auf die Unterschiede in der geometrischen Ausgestaltung der mittels des Verfahrens hergestellten Schneidstrangsegmente der Ausführungsbeispiele.

Figur 2 zeigt eine tragbare Werkzeugmaschine 28a mit einer Werkzeugmaschinentrennvorrichtung 14a, die zusammen ein Werkzeugmaschinensystem bilden. Die Werkzeugmaschinentrennvorrichtung 14a umfasst einen Schneidstrang 12a, der wenigstens ein mittels des oben beschriebenen Verfahrens hergestelltes Schneidstrangsegment 10a (Figur 4) aufweist, und eine Führungseinheit 50a zur Führung des Schneidstrangs 12a. Die tragbare Werkzeugmaschine 28a weist eine Kopplungsvorrichtung 30a zur formschlüssigen und/oder kraftschlüssigen Kopplung der Werkzeugmaschinentrennvorrichtung 14a auf. Die Kopplungsvorrichtung 30a kann hierbei als Bajonettverschluss und/oder als eine andere, einem Fachmann als sinnvoll erscheinende Kopplungsvorrichtung ausgebildet sein. Ferner weist die tragbare Werkzeugmaschine 28a ein Werkzeugmaschinengehäuse 52a auf, das eine Antriebseinheit 54a und eine Getriebeeinheit 56a der tragbaren Werkzeugmaschine 28a umschließt. Die Antriebseinheit 54a und die Getriebeeinheit 56a sind zur Erzeugung eines auf die Werkzeugmaschinentrennvorrichtung 14a übertragbaren Antriebsmoments auf eine, einem Fachmann bereits bekannte Art und Weise wirkungsmäßig miteinander verbunden. Die Getriebeeinheit 56a ist als Winkelgetriebe ausgebildet. Die Antriebseinheit 54a ist als Elektromotoreinheit ausgebildet. Es ist jedoch auch denkbar, dass die Antriebseinheit 54a und/oder die Getriebeeinheit 56a eine andere, einem Fachmann als sinnvoll erscheinende Ausgestaltung aufweisen. Die Antriebseinheit 54a ist dazu vorgesehen, den Schneidstrang 12a der Werkzeugmaschinentrennvorrichtung 14a in zumindest einem Betriebszustand über die Getriebeeinheit 56a anzutreiben. Hierbei wird der Schneidstrangs 12a in der Führungseinheit 50a der Werkzeugmaschinentrennvorrichtung 14a entlang einer Schneidrichtung 24a des Schneidstrangs 12a in der Führungseinheit 50a bewegt.

Figur 3 zeigt die Werkzeugmaschinentrennvorrichtung 14a in einem von der Kopplungsvorrichtung 30a der tragbaren Werkzeugmaschine 28a entkoppelten Zustand. Die Werkzeugmaschinentrennvorrichtung 14a weist den Schneidstrang 12a und die Führungseinheit 50a auf, die zusammen ein geschlossenes System bilden. Der Schneidstrang 12a wird mittels der Führungseinheit 50a geführt. Hierzu weist die Führungseinheit 50a zumindest ein als Führungsnut ausgebildetes Führungselement (hier nicht näher dargestellt) auf, mittels dessen der Schneidstrang 12a geführt wird. Hierbei wird der Schneidstrang 12a mittels die Führungsnut begrenzende Randbereiche der Führungseinheit 50a geführt. Es ist jedoch auch denkbar, dass das Führungselement in einer anderen, einem Fachmann als sinnvoll erscheinenden Art und Weise, wie beispielsweise als rippenartige Anformung an der Führungseinheit 50a, die in eine Ausnehmung an dem Schneidstrang 12a eingreift, ausgebildet ist. Der Schneidstrang 12a umfasst insgesamt eine Vielzahl von miteinander verbundenen Schneidstrangsegmenten 10a.

Zum Antrieb des Schneidstrangs 12a weist die Werkzeugmaschinentrennvorrichtung 14a oder die tragbare Werkzeugmaschine 28a ein Drehmomentübertragungselement 60a auf, das zur Übertragung von Kräften und/oder von Drehmomenten auf den Schneidstrang 12a mit der Antriebseinheit 54a und/oder der Getriebeeinheit 56a verbindbar ist. Bei einer Ausgestaltung der tragbaren Werkzeugmaschine 28a mit dem Drehmomentübertragungselement (hier nicht näher dargestellt) wird das Drehmomentübertragungselement während einer Kopplung der Werkzeugmaschinentrennvorrichtung 14a und der Kopplungsvorrichtung 30a mit dem Schneidstrang 12a verbunden. Bei einer Ausgestaltung der Werkzeugmaschinentrennvorrichtung 14a mit dem Drehmomentübertragungselement 60a sind das Drehmomentübertragungselement 60a und der Schneidstrang 12a selbst nach einer Entkopplung von der Kopplungsvorrichtung 30a im Eingriff. Zu einer Kopplung des mit der Werkzeugmaschinentrennvorrichtung 14a ausgebildeten Drehmomentübertragungselements 60a und der Antriebseinheit 54a und/oder der Getriebeeinheit 56a weist das Drehmomentübertragungselement 60a eine Kopplungsausnehmung 62a auf, in die ein Ritzel (hier nicht näher dargestellt) der Antriebseinheit 54a und/oder ein Zahnrad (hier nicht näher dargestellt) und/oder eine verzahnte Welle (hier nicht näher dargestellt) der Getriebeeinheit 56a in einem montierten Zustand eingreift. Die Kopplungsausnehmung 62a ist konzentrisch im Drehmomentübertragungselement 60a angeordnet. Ferner ist das Drehmomentübertragungselement 60a als Zahnrad ausgebildet. Das Drehmomentübertragungselement 60a ist zumindest teilweise in der Führungseinheit 50a gelagert. Hierbei ist das Drehmomentübertragungselement 60a, entlang einer Richtung senkrecht zur Schneidebene betrachtet, zumindest teilweise zwischen Außenflächen 64a der Führungseinheit 50a in einer Ausnehmung 66a der Führungseinheit 50a angeordnet. Ferner ist das Drehmomentübertragungselement 60a drehbar um eine Rotationsachse 68a in der Führungseinheit 50a gelagert.

Figur 4 zeigt eine Detailansicht des Schneidstrangsegments 10a des Schneidstrangs 12a der Werkzeugmaschinentrennvorrichtung 14a. Das Schneidstrangsegment 10a umfasst zumindest das Schneidenträgerelement 16a und zumindest das Schneidelement 18a. Das Schneidenträgerelement 16a und das Schneidelement 18a sind einstückig ausgebildet. Das Schneidelement 18a weist hierbei eine zumindest Titancarbid aufweisende Schneidschicht auf. Die Schneidschicht wird mittels eines CVD-Verfahrens auf das Schneidelement 18a aufgebracht. Es ist jedoch auch denkbar, dass die Schneidschicht alternativ oder zusätzlich einen anderen Werkstoff umfasst, wie beispielsweise Titannitrid, Titancarbonitrid, Aluminiumoxid, Titanaluminiumnitrid, Chromnitrid oder Zirkoncarbonitrid. Zudem ist es auch denkbar, dass die Schneidschicht mittels eines anderen, einem Fachmann als sinnvoll erscheinenden Verfahrens aufgebracht wird, wie beispielsweise mittels eines PVD- oder PACVD-Verfahrens.

Ferner weist das Schneidelement 18a entlang der Schneidrichtung 24a eine sich verändernde Verschränkung relativ zur Außenfläche 20a des Schneidenträgerelements 16a auf. Hierbei ist das Schneidelement 18a um zwei zumindest im Wesentlichen senkrecht verlaufende Achsen relativ zur Außenfläche 20a relativ zum Schneidenträgerelement 16a geneigt am Schneidenträgerelement 16a angeordnet. Die zwei zumindest im Wesentlichen senkrecht verlaufenden Achsen erstrecken sich hierbei bevorzugt zumindest im Wesentlichen parallel zur Außenfläche 20a des Schneidenträgerelements 16a und/oder zur Schneidebene des Schneidstrangs 12a.

Das Schneidenträgerelement 16a weist zumindest ein Segmentführungselement 40a auf, das dazu vorgesehen ist, eine Bewegung des Schneidenträgerelements 16a, in einem in der Führungseinheit 50a angeordneten Zustand in einer von der Führungseinheit 50a abgewandten Richtung betrachtet, zumindest entlang der zumindest im Wesentlichen parallel zur Schneidebene des Schneidstrangs 12a verlaufenden Richtung zu begrenzen. Das Segmentführungselement 40a wird von einem Querfortsatz gebildet, der sich zumindest im Wesentlichen senkrecht zur Schneidebene des Schneidstrangs 12a erstreckt. Hierbei begrenzt das Segmentführungselement 40a eine Längsnut. Das Segmentführungselement 40a ist dazu vorgesehen, zu einer Bewegungsbegrenzung mit den an der dem Schneidenträgerelement 16a zugewandten Innenwand der Führungseinheit 50a angeordneten und als Rippe oder Ausstanzung ausgebildeten Segmentgegenführungselementen (hier nicht näher dargestellt) zusammenzuwirken. Die Segmentgegenführungselemente sind korrespondierend mit dem Segmentführungselement 40a ausgebildet.

Zudem weist das Schneidenträgerelement 16a eine Druckkraftübertragungsfläche 70a auf. Die Druckkraftübertragungsfläche 70a ist dazu vorgesehen, Drucckräfte, die bei einer Bearbeitung eines Werkstücks (hier nicht näher dargestellt) auf den Schneidstrang 12a einwirken, mittels eines Zusammenwirkens mit einem Druckkraftaufnahmebereich (hier nicht näher dargestellt) der Führungseinheit 50a abzustützen. Der Druckkraftaufnahmebereich der Führungseinheit 50a ist hierbei, betrachtet entlang einer zumindest im Wesentlichen senkrecht zur Schneidebene des Schneidstrangs 12a verlaufenden Richtung, zwischen den zumindest im Wesentlichen parallel zueinander verlaufenden Außenflächen 64a der Führungseinheit 50a angeordnet.

Das Schneidenträgerelement 16a weist ferner eine Antriebsfläche 72a auf, die dazu vorgesehen ist, zu einem Antrieb des Schneidstrangs 12a mit Antriebsflächen des Drehmomentübertragungselements 60a zusammenzuwirken. Die Antriebsflächen des Drehmomentübertragungselements 60a sind hierbei als Zahnflanken ausgebildet. Die Antriebsfläche 72a des Schneidenträgerelements 16a ist hierbei korrespondierend mit den Antriebsflächen des Drehmomentübertragungselements 60a ausgebildet. Bei einem Antrieb des Schneidstrangs 12a liegen die Zahnflanken des Drehmomentübertragungselements 60a temporär an der Antriebsfläche 72a zu einer Übertragung von Antriebskräften an.

Des Weiteren weist der Schneidstrang 12a zumindest ein Verbindungselement 36a auf, das einstückig mit dem Schneidenträgerelement 16a ausgebildet ist. Das Verbindungselement 36a ist bolzenförmig ausgebildet. Hierbei ist das Verbindungselement 36a dazu vorgesehen, mittels eines Zusammenwirkens mit einer Verbindungsausnehmung eines weiteren Schneidenträgerelements 74a (Figur 5) des Schneidstrangs 12a eine formschlüssige Verbindung zwischen dem Schneidenträgerelement 16a und dem weiteren Schneidenträgerelement 74a zu realisieren. Das Schneidenträgerelement 16a umfasst ebenfalls eine Verbindungsausnehmung 76a, in der zur Bildung des Schneidstrangs 12a ein weiteres Verbindungselement (hier nicht näher dargestellt) des Schneidstrangs 12a anordenbar ist. Somit umfasst jedes Schneidenträgerelement des Schneidstrangs 12a zumindest ein Verbindungselement und zumindest eine Verbindungsausnehmung. Das Verbindungselement 36a schließt zumindest im Wesentlichen bündig mit der Außenfläche 20a des Schneidenträgerelements 16a ab. Es ist jedoch auch denkbar, dass das Verbindungselement 36a, betrachtet entlang einer zumindest im Wesentlichen senkrecht zur Außenfläche 20a verlaufenden Richtung, über die Außenfläche 20a hinaussteht. Hierbei kann das Schneidenträgerelement 16a in einem in der Führungsnut angeordneten Zustand über das Verbindungselement 36a an Randbereichen der Führungsnut geführt werden. Somit sind die Schneidenträgerelemente mittels eines Zusammenwirkens der Verbindungselemente und der Verbindungsausnehmungen relativ zueinander schwenkbar gelagert.

Ferner weist das Schneidenträgerelement 16a zumindest ein Quersicherungselement 22a auf, das dazu vorgesehen ist, das Schneidenträgerelement 16a in einem montierten Zustand weitestgehend gegen eine Querbewegung relativ zum weiteren Schneidenträgerelement 74a des Schneidstrangs 12a zu sichern. Das Quersicherungselement 22a ist am Verbindungselement 36a angeordnet. Hierbei weist das Quersicherungselement 22a zumindest einen Sicherungsbereich auf, der sich zumindest im Wesentlichen parallel zu einer Schneidebene des Schneidstrangs 12a erstreckt. Somit erstreckt sich der Sicherungsbereich zumindest im Wesentlichen parallel zur Außenfläche 20a des Schneidenträgerelements 16a. Das Quersicherungselement 22a wird nach einer Kopplung von zumindest dem Schneidenträgerelement 16a mit dem weiteren Schneidenträgerelement 74a des Schneidstrangs 12a mittels einer Prägevorrichtung an das Verbindungselement 36a des Schneidstrangs 12a geprägt. Somit wird der Sicherungsbereich infolge des Prägens des Quersicherungselements 22a ausgebildet.

Figur 5 zeigt den Schneidstrang 12a nach einer Kopplung zumindest des Schneidenträgerelements 16a und des weiteren Schneidenträgerelements 74a und nach einem Prägen des Quersicherungselements 22a. Somit sind das Schneidenträgerelement 16a und das weitere Schneidenträgerelement 74a nach einer Kopplung entlang zumindest zwei entgegengesetzten und zumindest im Wesentlichen senkrecht zur Schneidebene verlaufenden Richtungen miteinander ohne einen Einsatz von Trennwerkzeugen unlösbar verbunden. An dem weiteren Schneidenträgerelement 74a ist ein weiteres unverschränktes Schneidelement 38a einstückig ausgebildet. Entlang der Schneidrichtung 24a betrachtet folgt auf das weitere Schneidenträgerelement 74a ein weiteres erstes Schneidenträgerelement 80a, an dem ein weiteres einstückig mit dem weiteren ersten Schneidenträgerelement 80a ausgebildetes verschränktes Schneidelement 82a angeordnet ist. Das Schneidelement 18a weist hierbei im Vergleich zu einer Verschränkung zum weiteren verschränkten Schneidelement 82a des weiteren ersten Schneidenträgerelements 80a eine Verschränkung entlang einer entgegengesetzt ausgerichteten Richtung auf. Somit weist der Schneidstrang folgende Reihenfolge an Schneidenträgerelementen auf: L (Schneidenträgerelement 16a), M (weitere Schneidenträgerelement 74a), R (weitere erstes Schneidenträgerelement 80a) und M (weitere Schneidenträgerelement 74a). Diese Reihenfolge an Schneidenträgerelementen wiederholt sich entlang der Schneidrichtung 24a entlang eines gesamten Umfangs des Schneidstrangs 12a. Es ist jedoch auch denkbar, dass der Schneidstrang 12a eine andere, einem Fachmann als sinnvoll erscheinende Anordnung von Schneidenträgerelementen des Schneidstrangs 12a entlang des Umfangs des Schneidstrangs 12a aufweist, wie beispielsweise [L, R]; [L, L, M, M, R, R, M, M]; [L, L, R, R] usw.

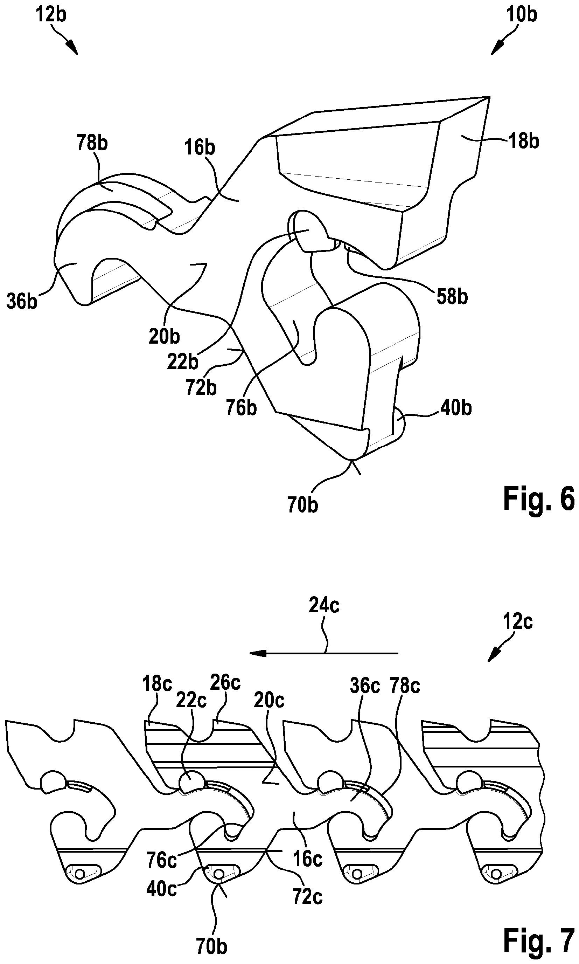

In den Figuren 6 und 7 sind alternative Ausführungsbeispiele dargestellt. Im Wesentlichen gleichbleibende Bauteile, Merkmale und Funktionen sind grundsätzlich mit den gleichen Bezugszeichen beziffert. Die nachfolgende Beschreibung beschränkt sich im Wesentlichen auf die Unterschiede zu dem in den Figuren 2 bis 5 beschriebenen, ersten Ausführungsbeispiel, wobei bezüglich gleichbleibender Bauteile, Merkmale und Funktionen auf die Beschreibung des ersten Ausführungsbeispiels in den Figuren 2 bis 5 verwiesen werden kann.

Figur 6 zeigt ein alternatives Schneidstrangsegment 10b eines Schneidstrangs 12b. Das Schneidstrangsegment 10b umfasst ein Schneidenträgerelement 16b und ein Schneidelement 18b. Das Schneidelement 18b weist entlang einer Schneidrichtung 24b des Schneidstrangs 12b eine sich verändernde Verschränkung relativ zu einer Außenfläche 20b des Schneidenträgerelements 16b auf. Das Schneidenträgerelement 16b umfasst zur Bildung des Schneidstrangs 12b zumindest ein Verbindungselement 36b. Das Verbindungselement 36b ist einstückig mit dem Schneidenträgerelement 16b ausgebildet. Hierbei ist das Verbindungselement 36b als Längsfortsatz des Schneidenträgerelements 16b ausgebildet. Der Längsfortsatz ist hakenförmig ausgebildet. Hierbei ist der Längsfortsatz abweichend von einem stabförmigen Fortsatz ausgebildet, an den ein kreisförmiges Formschlusselement angeformt ist und/oder abweichend von einem halbkreisförmigen Fortsatz.

Des Weiteren weist das als Längsfortsatz ausgebildete Verbindungselement 36b auf einer Seite einen Quersicherungsbereich 78b auf. Der Quersicherungsbereich 78b ist dazu vorgesehen, mittels eines Zusammenwirkens mit zumindest einem Quersicherungselement eines mit dem Schneidenträgerelement 16b verbundenen weiteren Schneidenträgerelements (hier nicht näher dargestellt) des Schneidstrangs 12b, eine Querbewegung des Schneidenträgerelements 16b entlang zumindest zweier entgegengesetzt ausgerichteten Richtungen in einem gekoppelten Zustand relativ zum weiteren Schneidenträgerelement zumindest weitestgehend zu verhindern. Hierbei ist der Quersicherungsbereich 78b als Rippe ausgebildet. Es ist jedoch auch denkbar, dass der Quersicherungsbereich 78b eine andere, einem Fachmann als sinnvoll erscheinende Ausgestaltung aufweist, wie beispielsweise eine Ausgestaltung als Nut usw. Der Quersicherungsbereich 78b ist auf einer dem einstückig mit dem Schneidenträgerelement 16b ausgebildeten Schneidelement 18b zugewandten Seite des Verbindungselements 36b angeordnet.

Ferner weist das Schneidenträgerelement 16b zwei Quersicherungselemente 22b, 58b auf, die dazu vorgesehen sind, in einem gekoppelten Zustand des Schneidenträgerelements 16b mit dem weiteren Schneidenträgerelement mit einem Quersicherungsbereich des weiteren Schneidenträgerelements zusammenzuwirken. Die Quersicherungselemente 22b, 58b sind jeweils in einem eine Verbindungsausnehmung 76b des Schneidenträgerelements 16b begrenzenden Randbereich des Schneidenträgerelements 16b angeordnet. Hierbei sind die Quersicherungselemente 22b, 58b einstückig mit dem Schneidenträgerelement 16b ausgebildet. Die Quersicherungselemente 22b, 58b sind jeweils mittels eines Prägeverfahrens einstückig an das Schneidenträgerelement 16b angeformt.

Figur 7 zeigt einen weiteren alternativen Schneidstrang 12c, der zumindest ein Schneidstrangsegment 10c aufweist. Das Schneidstrangsegment 10c weist eine zum Schneidstrangsegment 10b aus Figur 6 zumindest im Wesentlichen analoge Ausgestaltung auf. Im Unterschied zum Schneidstrangsegment 10b aus Figur 6 weist das Schneidstrangsegment 10c aus Figur 7 ein Schneidelement 18c und ein weiteres Schneidelement 26c auf, die einstückig mit einem Schneidenträgerelement 16c des Schneidstrangsegments 10c ausgebildet sind. Das Schneidelement 18c weist entlang einer Schneidrichtung 24c des Schneidstrangs 12c eine sich verändernde Verschränkung relativ zu einer Außenfläche 20c des Schneidenträgerelements 16c auf. Zudem ist das weitere Schneidelement 26c ebenfalls zumindest partiell verschränkt relativ zur Außenfläche 20c des Schneidenträgerelements 16c am Schneidenträgerelement 16c angeordnet. Hierbei sind das Schneidelement 18c und das weitere Schneidelement 26c entlang der Schneidrichtung 24c wellenförmig an dem Schneidenträgerelement 16c angeordnet. Das Schneidelement 18c und das weitere Schneidelement 26c weisen somit an dem Schneidenträgerelement 16c eine voneinander differierende Verschränkung auf. Hierbei ist es denkbar, dass der Schneidstrang 12c weitere Schneidstrangsegmente aufweist, die ein von der wellenförmigen Anordnung des Schneidelements 18c und des weiteren Schneidelements 26c abweichende wellenförmige Anordnung aufweisen. Somit ergibt sich, betrachtet entlang der Schneidrichtung 24c, entlang eines gesamten Umfangs des Schneidstrangs 12c eine wellenförmige Anordnung von Schneidelementen, die alternierend ist. Hierbei weist die wellenförmige Anordnung von Schneidelementen entlang der Schneidrichtung 24c eine sinusförmige Ausgestaltung auf (hier nicht näher dargestellt).

## Patentansprüche

1. Verfahren zu einer Herstellung eines Schneidstrangsegments eines Schneidstrangs (12) einer Werkzeugmaschinentrennvorrichtung, das zumindest ein Schneidenträgerelement (16) und zumindest ein Schneidelement (18) umfasst, **dadurch gekennzeichnet, dass** das Schneidstrangsegment in einem ersten Schritt als einzelner Rohling aus einem Bandmaterial (32) gestanzt wird, wobei in einem weiteren Schritt das Schneidelement (18) durch Prägen zumindest partiell verschränkt relativ zu einer Außenfläche (20) des Schneidenträgerelements (16) am Schneidenträgerelement (16) angeformt wird, wobei in zumindest einem Schritt durch Prägen ein Quersicherungselement (22) an das Schneidenträgerelement (16) angeformt wird.

## Claims

1. Method for producing a cutting strand segment of a cutting strand (12) of a power-tool parting device, said cutting strand segment comprising at least one cutter carrier element (16) and at least one cutting element (18), **characterized in that,** in a first step, the cutting strand segment is punched out of a band material (32) as a single blank, wherein, in a further step, the cutting element (18) is integrally formed on the cutter carrier element (16) in an at least partially set manner relative to an outer surface (20) of the cutter carrier element (16) by embossing, wherein, in at least one step, a transverse securing element (22) is integrally formed on the cutter carrier element (16) by embossing.

## Revendications

1. Procédé de fabrication d'un segment de chaîne coupante d'une chaîne coupante (12) d'un dispositif de séparation pour machine-outil, qui comprend au moins un élément de support de lame de coupe (16) et au moins un élément de coupe (18), **caractérisé en ce que** dans une première étape, le segment de chaîne coupante est estampé en tant que pièce brute unique à partir d'un matériau en bande (32), dans une étape supplémentaire, l'élément de coupe (18) étant façonné par gaufrage sur l'élément de support de lame de coupe (16) sous forme partiellement croisée par rapport à une surface extérieure (20) de l'élément de support de lame de coupe (16), dans au moins une étape, un élément de fixation transversale (22) étant façonné par gaufrage sur l'élément de support de lame de coupe (16).
